# EUROPEAN PATENT APPLICATION

(11) **EP 2 019 361 A1**
(43) Date of publication of application: **28.01.2009**
(21) Application number: 07014705.3
(22) Date of filing: 26.07.2007
(51) Int. Cl.: G06F 17/30, G06F 17/22

(54) **A method and apparatus for extraction of textual content from hypertext web documents**

(71) Applicant: SIEMENS AKTIENGESELLSCHAFT, 80333 München (DE)
(72) Inventor: Skubacz, Michal, 82194 Gröbenzell (DE); Ziegler, Nicolas-Cai, Dr., 80337 München (DE)

(57) **Abstract**

A method and apparatus for the extraction of textual content from hypertext documents comprising the steps of generating for each text document a pruned document model tree comprising merged text nodes by removing selected tag nodes from a document model tree of said text document, calculating for each merged text node of said pruned document model tree a set of text features which are compared with predetermined feature criteria to decide whether said merged text node is an informative merged text node or not, and assembling the informative merged text nodes to generate a text file containing said textual content.

## Description

### BACKGROUND OF THE INVENTION

The amount of information and text documents downloaded via the internet is increasing permanently. These documents can be viewed or downloaded via networks such as the internet and are formatted to a large extent in HTML or in XML. The documents such as HTML documents do not only contain relevant information but also irrelevant information. For example a news article presented by an HTML document also contains references to other articles, link lists for navigating, or advertisements.

A search engine like Google operates on the basis of generating an index word list for every document that is to become searchable. The index word list is generated by indexing the (HTML) documents. During indexation stop words like "is", "she", "should", etc. in English or stop words in other languages like German, e.g "der", "ist", "soll", "hat", to name just a few, are removed. The search engine's index is then fed all the words found in the document, along with their frequency of occurrence. This bears several implications, as the following examples show:

For instance, a conventional search engine which searches for online news articles that have to do with "Nokia" in general return all documents that contain the term "Nokia" somewhere in the document body. While some of the documents represent hits, i.e. documents that are relevant for the user issuing the search query, other documents only contain irrelevant information. For example, a Web document which contains an advertisement for a new Nokia cell phone will also qualify as a search result, even though the advertisement is not what a human would regard as informative content. In general, advertisements and all other surrounding content that are not part of the main article and news content are regarded as "page clutter" or "noise".

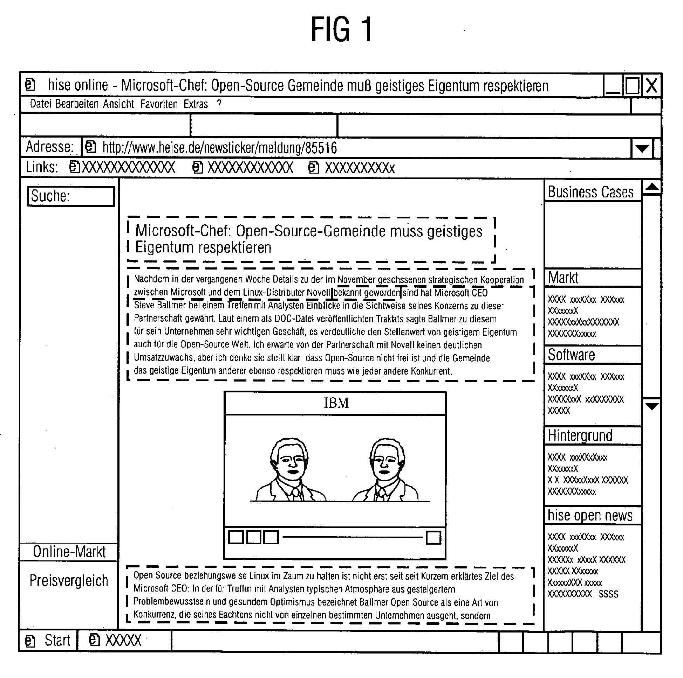

As another example, some documents such as news pages may not only contain an actual news article (and advertisements, as mentioned above) but also *link lists* to all other news of the day, for instance as shown in figure 1. When performing purely syntax-based document retrieval (as common search engines do) without preprocessing of the documents, any document that contains a search query in one of its links is also returned as a search hit. For example, when searching for articles or documents having information about "Airbus" the document as shown in figure 1, which deals with "Microsoft", is delivered as a search result, because a link in the category business cases refers to "Airbus". This is an issue, as the document's main topic is not about Airbus, but Microsoft.

Accordingly, conventional approaches to information retrieval that do not feature means for the extraction of textual contents do also output irrelevant documents in response to a search query.

Accordingly, it is an object of the present invention to provide a method and an apparatus for extraction of textual content from hypertext documents supplying the user with more relevant (and less irrelevant) information in response to a search query.

### SUMMARY OF THE INVENTION

The invention provides a method for extraction of textual content from hypertext documents (in particular HTML) comprising the steps of:
generating for each text document a pruned document model tree comprising merged text nodes by removing selected tag nodes from a document model tree of said text document; calculating for each merged text node of said pruned document model tree a set of text features which are compared with predetermined feature criteria to decide whether said merged text node is an informative merged text node or not; and assembling the informative merged text nodes to generate a text file containing said textual content.

The method for extraction of textual content from hypertext documents according to the present invention is fully automated and does not require any human intervention, for example by manually indicating relevant passages for a document template.

The method according to the present invention is used for any text document, in particular for HTML documents and XML documents.

In an embodiment of the method according to the present invention the document model tree is formed by a document object model (DOM)-tree.

In an embodiment of the method according to the present invention the document model tree comprises text nodes and tag nodes.

In an embodiment of the method according to the present invention the feature criteria are formed by linguistic text features and/or structural text features.

In an embodiment of the method according to the present invention the feature criteria are formed by feature threshold values.

In an embodiment of the method according to the present invention said text features comprise:
a sentence number indicating a number of sentences in said merged text node;
a non-alphanumeric character ratio indicating a ratio of non-alphanumeric characters with respect to all characters in said merged text node
an average sentence length indicating an average length of a sentence in said merged text node,
a stop word percentage indicating a percentage of stop words with respect to the overall number of words in said merged text node,
an anchor tag percentage indicating a percentage of anchor tags with respect to the number of word tokens in said merged text node,
and a formatting text percentage indicating a percentage of formatting tags with respect to the number of word tokens in said merged text node.

In an embodiment of the method according to the present invention the feature criteria are determined in a learning phase by means of an optimization algorithm.

In an embodiment the optimization algorithm is a non-linear optimization algorithm.

In an embodiment of the method according to the present invention the optimization algorithm is a particle swarm algorithm.

In an embodiment of the method according to the present invention the optimization algorithm is a simplex algorithm.

In an embodiment of the method according to the present invention the optimization algorithm is a genetic algorithm.

The invention further provides an apparatus for extraction of textual content from hypertext documents comprising:
means for generating for each text document a pruned document model tree comprising merged text nodes by removing selected tag nodes from a document model tree of said text document; means for calculating for each merged text node of said pruned document model tree a set of text features which are compared with predetermined feature criteria to decide whether said merged text node is an informative merged text node or not; and
means for assembling the informative merged text nodes to generate a text file containing said textual content.

In an embodiment of the apparatus according to the present invention the apparatus is formed by a processor.

The invention further provides a computer program comprising instructions for performing the method according to the present invention.

The invention further provides a data carrier for storing a computer program comprising instructions for performing the method according to the present invention.

### SHORT DESCRIPTION OF THE FIGURES

Figure 1 shows an example of an HTML text document available via a network such as the internet according to the state of the art;
Figure 2 shows an example of a document model tree as employed by the method according to the present invention.
Figure 3A, 3B, 3C show an example to illustrate a generation of a pruned document model tree from a document model tree as performed in a step of a possible embodiment of the method according to the present invention;
Figure 4 is a block diagram of a possible embodiment of an extraction apparatus for extraction of textual content from text documents according to the present invention;
Figure 5 shows a flow diagram for illustrating a possible embodiment of the method for extraction of textual content from text document according to the present invention;
Figure 6 shows a flow diagram of a possible embodiment of the method for the extraction of textual content from hypertext documents according to the present invention.

### DETAILED DESCRIPTION OF PREFERRED EMBODIMENTS

A conventional document such as the HTML document shown in figure 1 comprises informative content, also called "signal", and irrelevant information or page clutter, also called "noise". In the given exemplary HTML document of figure 1, the informative content formed by the article concerning Microsoft explains a comment of the Microsoft CEO with respect to intellectual property. Beside this informative content, the conventional HTML document comprises other elements such as images or links to other articles.
Next to pure text, HTML documents commonly comprise a plurality of tags such as image tags, link tags, format tags or table tags. The browser assembles the webpage as shown in figure 1 and displays it to the user using the tags of the HTML document.

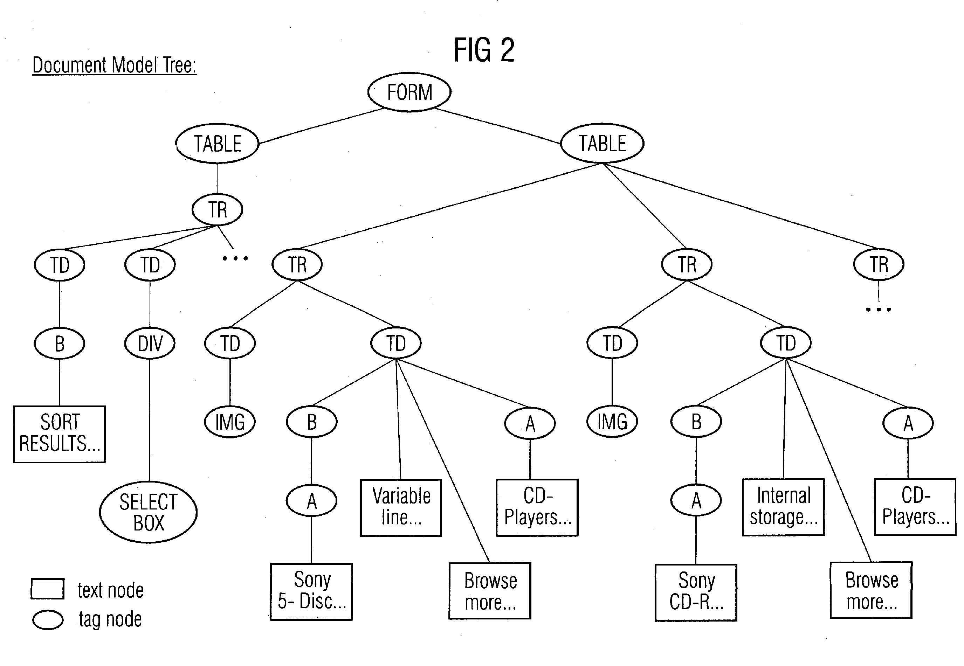

The documents such as the HTML document shown in figure 1 can be represented by a document object model tree (DOM-tree) as shown in figure 2. The exemplary document model tree as shown in figure 2 comprises text nodes and tag nodes. In the given example of figure 2 the document is a form as indicated by the tag "form" consisting of tables as indicated by the tag "table". Each table consists of table rows indicated by the tag "TR" containing table data indicated by the tag "TD". In the given example table data of the text node "short results..." are displayed to the user on the screen in bold letters as indicated by the tag "B" (bold). Another table data cell (TD) comprises a paragraph (DIV) containing a select box (e.g. an instance of a drop-down menu). Another table row TR includes as table data TD an image "IMG". Other table data in the same table row TR comprises tags such as "Sony 5-disc ..." forming a link as indicated by a tag "A" (anchor) wherein the link is displayed to the user in bold letters (B). The same table data TD comprises text such as "Variable line" for "Browse more" and another link "CD players...".

In an embodiment of the method according to the present invention a document model tree such as shown in figure 2 is generated for each text document such as an HTML text document. In a further step tag nodes or HTML elements that are irrelevant such as tags and elements that only change the visual appearance of the text and do not have any impact on the text structure are removed to generate a pruned tree representation comprising of only merged text nodes. Such formatting tags are formed for instance by "A", "B",..., "I", "BR", "H1", etc.

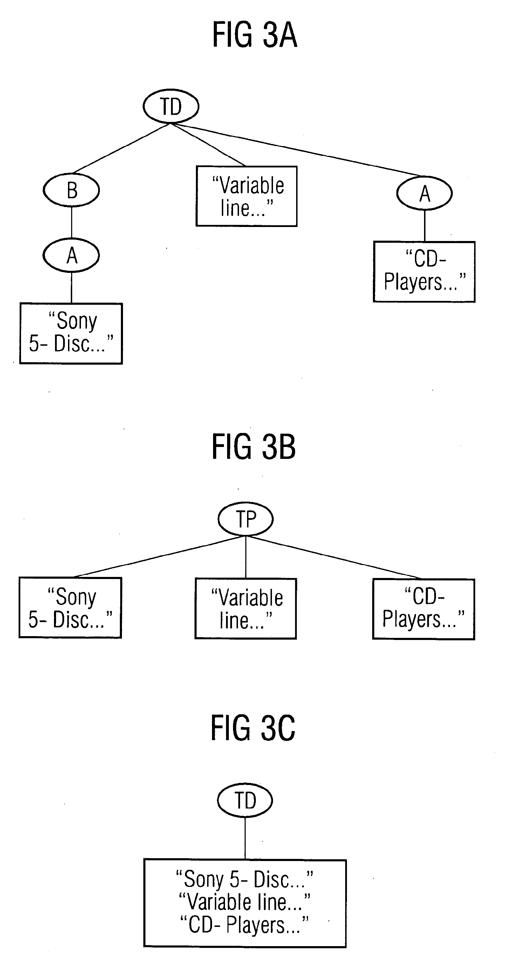

Figure 3A, 3B, 3C illustrate the generation of a pruned document model tree from a document model tree such as a document object model tree DOM performed by an embodiment of the method according to the present invention. In the given example of figure 3A the document object model tree comprises a tag node TD (table data) having a link in bold letters "Sony 5-disc ...", text node "Variable line ..." and another link "CD players ...".

As can be seen in figure 3B the HTML tags are removed and then merged to a merged text node as shown in figure 3C.

After having generated a pruned document model tree comprising merged text nodes such as shown in figure 3C the method according to the present invention calculates in a further step for each merged text node of the pruned document model tree a set of text features. These text features comprise linguistic text features and structural text features. The calculated text features are compared with predefined feature criteria such as feature threshold values to decide whether the respective merged text node is an informative merged text node or not. This calculation can be performed by a processor.

The text features can for example comprise a sentence number, a non-alphanumeric character ratio, an average sentence length, a stop word percentage, an anchor tag percentage and/or a formatting tag percentage.

The sentence number indicates a number of sentences in a respective merged text node of the pruned document model tree. This linguistic text feature is based on the fact that a large number of sentences in a merged text node is a good indication for real informative text content. On the other hand textual content within link lists and other clutter on the web page normally contain only few sentences. In a possible embodiment, in order to detect sentence boundaries, a sentence splitter based on a language-specific statistical model can be used.

The non-alphanumeric character ratio also forms a linguistic text feature which indicates the ratio of non-alphanumeric characters in the merged text node with respect to the overall number of characters in said merged text node. The share of non-alphanumeric characters such as period ".", exclamation mark "!", coon ",", dollar "$", curly braces "{" and "}", and so forth, is calculated with respect to the overall number of characters in the merged text node. Non-alphanumeric characters are less typical for real informative text content than for page clutter.

A further linguistic text feature which can be used for evaluating whether the merged text node contains relevant information is the average sentence length. The average sentence length indicates an average length of a sentence in the merged text node. The longer the sentences are the higher is the probability that the text block or merged text node comprises real informative content. For instance, link lists, titles and other information clutter of a web page are generally made up of short sentences only. For calculating the average sentence length, the method according to the present invention can use statistical word tokenizers.

Another, linguistic text feature is a stop word percentage indicating the percentage of stop words in the merged text node. The percentage of stop words with respect to the total number of words in the text block is an indicator whether the text block contains informative content. Stop words are words that have no real information value and tend to occur extremely often. For example, in English these stop words are formed by words such as "is", "she", "should". In other languages there are other stop words. For instance in German typical stop words are "der", "ist", "soll", "hat" to mention just a few German stop words. A high share of stop words in a text indicates that the text contains real, i.e. informative, textual content. In contrast, titles and link entries generally do not contain a lot of stop words since they are commonly made up of primarily named entities such as product names, geographic location etc. In contrast, informative content is more "narrative". The share of stop words is computed by the number of stop words with respect to the overall number of words in the text block at hand. In a possible embodiment for computing the stop word percentage, the language of the text is detected automatically and the respective list of stopwords selected accordingly.

A structural text feature is for example an anchor tag percentage. The anchor tag percentage indicates the percentage of anchor tags with respect to the text block size.

Another possible structural text feature is the formatting tag percentage indicating the percentage of formatting tags such as (B), (I), (Font) etc., with respect to the text block size.

The method according to the present invention can employ in other embodiments more than the above mentioned text features. The method and apparatus according to the present invention can use any kind of linguistic or structural text features giving a hint whether the text block contains informative textual content or not.

After calculation of the text features for each merged text node or text block, this text block is characterized by its set of computed text features f.

For example, a text block can be characterized by the following computed feature set:
features: = {
number of sentences = 3
average sentence lenght = 5.3
stop word percentage = 27 %, ... }

After calculation of the text features set each text feature f of the merged text node is compared with a corresponding predetermined feature criterion. This feature criterion is formed for example by a feature threshold value TH. By comparing the text feature f with its corresponding feature criterion it is decided whether the defined feature criterion is met or not. If all features f of the computed set of text features fulfill the respective feature criteria, it is decided that the merged text node or text block is an informative merged text node containing useful or informative content.

In a possible embodiment, a predetermined threshold value f_{TH} is provided for each text feature f, which serves as a means to discriminate between real content and clutter. For instance, when setting the feature threshold value f_{TH} for the average number of sentences to "3" then all text blocks that have fewer than three sentences will be discarded. Likewise, when requiring the stop word percentage to be at least 10%, all text blocks or merged text nodes with a lower percentage are decided not to contain real informative text content. In order to qualify as an informative merged text node the analyzed text node must - in a possible embodiment - satisfy all the feature criteria.

In a possible embodiment, the text feature criteria are predetermined by a user.

In a possible embodiment, the feature criteria such as the threshold values f_{TH} are determined during a learning phase. For determined optimized thresholds for each feature f these thresholds are - in an embodiment - calculated by means of machine learning techniques such as the C4.5 decision trees, back propagation feed-forward neural networks, by multiple linear regression or by non-linear optimization techniques. Non-linear optimization techniques are formed for instance by genetic algorithms, a particle swarm optimization algorithm or a simplex algorithm. In a possible embodiment of the method according to the present invention the optimal threshold values are chosen by resorting to particle swarm optimization.

For example, humans label the data, i.e. they select a number of relevant web documents; for example, one hundred documents selected by the human assessors. The human assessors then manually extract the informative content from the selected documents, so as to form a gold standard for benchmarking.

Then a function for determining the goodness of content extraction is defined. This is done to decide whether the machine performs the extraction of the real content well. Supposing that the human-labeled content reflects the perfect extraction result, a similarity function is determined between two documents of extracted text, i.e. the machine-extracted and the human-extracted version of the same original document. To this end, for instance the cosine similarity metric on term frequency vector representations of the two extracted versions is used. Another similarity function can also be employed, e.g. Pearson correlation or Spearman correlation. Then the human labeled data is input to a particle swarm optimizer (PSO). The non-linear optimizer then determines a set of feature thresholds as the optimum result.

After the learning procedure or learning phase has successfully terminated, the calculated set of feature thresholds is stored for later use. The learned model, i.e the set of feature thresholds, is now applicable to the entire class of said documents and does not have to be adapted to new web sites. After the learning procedure has taken place, no further human intervention is required for optimization. The learning step or learning procedure normally only takes place once. After completion of the learning procedure the method for extraction of textual content from hypertext documents can be performed for a plurality of text documents such as HTML web documents.

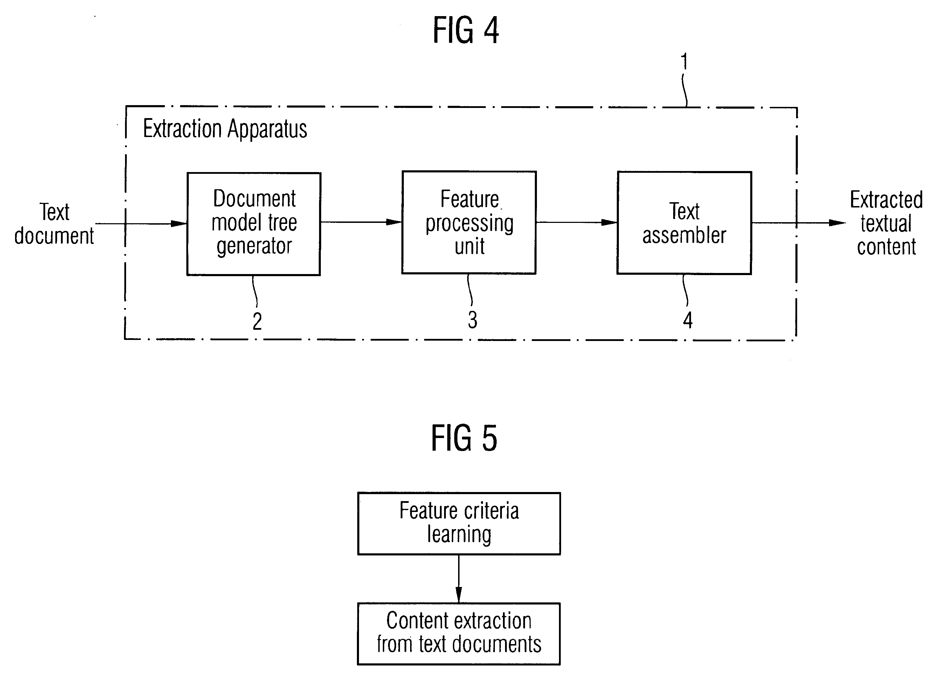

In a possible embodiment of the method according to the present invention, the extraction is performed by means of an extraction apparatus as shown in figure 4. As can be seen from figure 4 the extraction apparatus 1 according to the present invention comprises - in one embodiment - a document model tree generator 2, a feature processing unit 3 and a text assembler 4. The extraction apparatus 1 receives the text document such as an HTML web document, e. g. via a network such as the internet. The document model tree generator 2 generates in a first step a document model tree such as a document object model tree (DOM). Then the document model tree generator 2 removes predetermined tag nodes from the original document model tree to generate a pruned document model tree comprising only merged text nodes.

The feature processing unit 3 receives the pruned document model tree from the document model tree generator 2 and calculates for each merged text node of said pruned document model tree a set of text features f. These text features are formed by linguistic text features and structural text features. The feature processing unit 3 compares the calculated text features f with predetermined feature criteria such as feature threshold values f_{TH} calculated in a learning phase.

The feature processing unit 3 compares the calculated text features f with the threshold values f_{TH} to decide whether the merged text node is an informative merged text node, i.e. contains useful textual content. Those merged text nodes which are decided to contain informative useful text content are supplied to the text assembler 4 which assembles the informative merged text nodes to generate a text file containing the useful textual content. The text assembler 4 performs, in a possible embodiment, a sequential concatenation of all text blocks that have successfully passed the feature matching process performed by the feature processing unit 3.

Figure 5 shows a simple flow-chart of a possible embodiment of the method for extraction of textual content according to the present invention. In a first phase feature criteria such as feature threshold values are learned in the learning phase by means of machine learning techniques, e.g. back propagation feed forward neural networks, multiple linear regression, etc., or non-linear optimization techniques. The feature criteria are stored in a memory of the feature processing unit 3 shown in figure 4.

After completion of the learning phase a text document is applied to the extraction apparatus 1 as shown in figure 4. The extraction apparatus 1 outputs an extracted textual content in form of a text file.

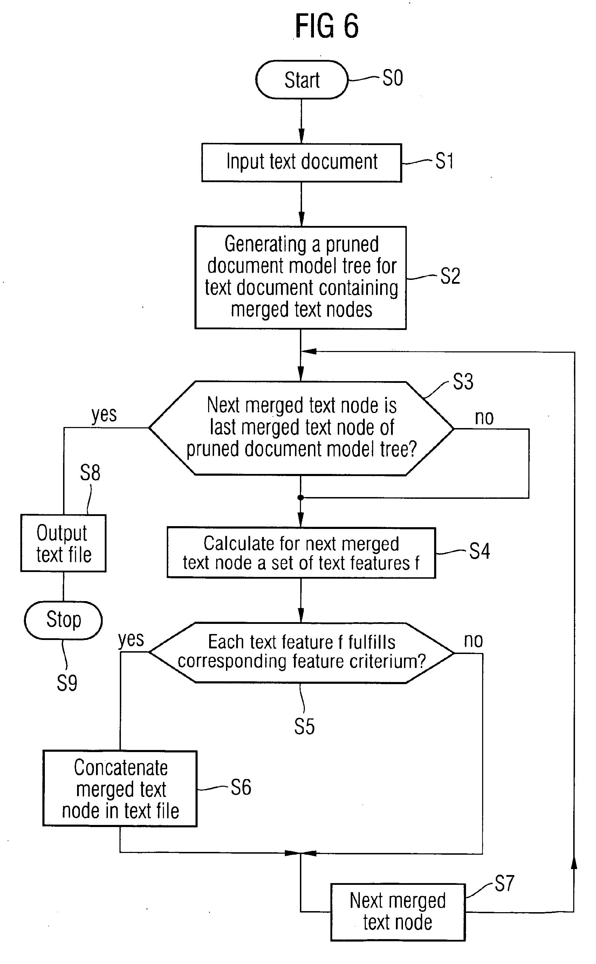

Figure 6 shows a flow-chart of a possible embodiment of the method for extraction of textual contents from text documents according to the present invention.

In a first step S1 a text document such as an HTML document is applied to the extraction apparatus 1.

The document model tree generator 2 generates a pruned document model tree for the applied text document. The pruned document model tree contains merged text nodes and tags which have not been pruned.

In a further step S3 it is decided whether the current merged text node is the last merged text node of the pruned document model tree, that is, if there is a next merged text node.

If a next merged text node exists, a set of text features is calculated for the next merged text node of the pruned model tree in step S4.

In a further step S5 it is decided whether each text feature f fulfils a corresponding feature criterion such as a feature threshold value f_{TH}. If each text feature f fulfils, its corresponding feature criterion, it is decided that the respective merged text node is an informative merged text node and concatenated with the other useful merged text nodes by the text assembler 4 in step S6.

In step S7 the next merged text node is loaded from the document model tree generator 2 to the feature processing unit 3. If in step 3 it is decided that the next merged text node is beyond the last merged text node of the pruned document model tree, the assembled output text file is output in step S8. The process stops in step S9.

The extraction apparatus 1 according to the present invention is formed in a possible embodiment by a processor. In an alternative embodiment the extraction apparatus 1 is formed by a decentralized system wherein the document model tree generator 2, the feature processing unit 3, and the text assembler 4 are formed by different processing means connected to each other via a network. In a possible embodiment the document model tree generator 2, the feature processing unit 3, and the text assembler 4 are formed by servers connected to each other via a network. In an alternative embodiment the document model tree generator 2, the feature processing unit 3, and the text assembler 4 are included in the same server. The extracted textual content output by the extraction apparatus 1 as shown in figure 4 can be stored in a database. The extraction apparatus 1 has a high performance and allows to extract specific textual content. The extraction of textual content is performed in a fully automated fashion without any intervention of the user.

## Claims

1. A method for extraction of textual content from hypertext documents comprising the steps of:
(a) generating for each hypertext document a pruned document model tree comprising merged text nodes by removing selected tag nodes from a document model tree of said text document;
(b) calculating for each merged text node of said pruned document model tree a set of text features which are compared with predetermined feature criteria to decide whether said merged text node is an *informative* merged text node; and
(c) assembling the informative merged text nodes to generate a text file containing said textual content.

2. The method according to claim 1,
wherein said text documents are formed by XML documents or HTML documents.

3. The method according to claim 1,
wherein said document model tree is formed by a document object model (DOM)-tree.

4. The method according to claim 1,
wherein said document model tree comprises text nodes and tag nodes.

5. The method according to claim 1,
wherein said text features are formed by linguistic text features and structural text features.

6. The method according to claim 1,
wherein the feature criteria are formed by feature threshold values.

7. The method according to claim 1,
wherein said text features comprise:
- a sentence number indicating the number of sentences in said merged text node;
- a non-alphanumeric character ratio indicating a ratio of non-alphanumeric characters with respect to the overall number of characters in said merged text node,
- an average sentence length indicating an average length of sentences in said merged text node,
- a stop word percentage indicating a percentage of stop words in said merged text node (with respect to the total number of words in said text node),
- an anchor tag percentage indicating a percentage of anchor tags in said merged text node (with respect to the total number of words in said text node) and
- a formatting tag percentage indicating a percentage of text formatting tags in said merged text node (with respect to the total number of words in said text node).

8. The method according to claim 1,
wherein the feature criteria are determined in a learning phase by means of an optimization algorithm.

9. The method according to claim 8,
wherein the optimization algorithm is a particle swarm optimization algorithm.

10. The method according to claim 8,
wherein the optimization algorithm is a simplex algorithm.

11. The method according to claim 8,
wherein the optimization algorithm is a genetic algorithm.

12. An apparatus for extraction of textual content from text documents comprising:
(a) means for generating for each text document a pruned document model tree comprising merged text nodes by removing selected tag nodes from a document model tree of said text document;
(b) means for calculating for each merged text node of said pruned document model tree a set of text features which are compared with predetermined feature criteria to decide whether said merged text node is an informative merged text node; and
(c) means for assembling the informative merged text nodes to generate a text file containing said textual content.

13. The apparatus according to claim 12,
wherein said apparatus is formed by a processor.

14. A computer program comprising instructions for performing the method according to claim 1.

15. A data carrier for storing a computer program according to claim 14.
